# EUROPEAN PATENT APPLICATION

(11) **EP 4 841 248 A1**
(43) Date of publication of application: **18.11.2026**
(21) Application number: 24943103.2
(22) Date of filing: 20.08.2024
(51) Int. Cl.: G01N 21/88, G01N 21/95, G01N 21/01

(54) **SYSTEM FOR INSPECTING BATTERY CELL INSULATION FILM, AND METHOD FOR SAME**

(30) Priority: 13.06.2024 CN 202410757501
(71) Applicant: Contemporary Amperex Technology Co., Limited, Ningde, Fujian 352100 (CN)
(72) Inventor: CHE, Xingchi, Ningde, Fujian 352100 (CN); MENG, Pengfei, Ningde, Fujian 352100 (CN); LI, Tong, Ningde, Fujian 352100 (CN); FENG, Jinzhou, Ningde, Fujian 352100 (CN); MA, Lin, Ningde, Fujian 352100 (CN)
(74) Representative: Straus, Alexander
(86) International application number: PCT/CN2024/113473
(87) International publication number: WO 2025/255946

(57) **Abstract**

The present application discloses a system for inspecting a battery cell insulation film, and a method for same. The system comprises: a transfer mechanism, comprising a base, a sliding table, a first clamping jaw, and a second clamping jaw, the first clamping jaw and the second clamping jaw being disposed on two sides of the base in a first direction, and the sliding table being slidably disposed on the base; first to fifth image capturing assemblies, wherein if the first clamping jaw places a battery cell onto the sliding table, and the sliding table transfers the battery cell to a first image capturing position, the first to third image capturing assemblies are located at positions corresponding to three surfaces of the battery cell, respectively, and acquire images of a first large surface, a first side surface, and a second side surface of the battery cell, and if the sliding table transfers the battery cell to a second image capturing position, and the second clamping jaw grips the battery cell, the fourth and fifth image capturing assemblies are located at positions corresponding to two other surfaces of the battery cell, respectively, and acquire images of a bottom support surface and a second large surface of the battery cell; and an upper computer, used to detect whether an insulating film of the battery cell has a defect on the basis of the images of the first large surface, the first side surface, the second side surface, the second large surface and the bottom support surface.

## Description

### CROSS-REFERENCE TO RELATED APPLICATIONS

The present application claims priority to Chinese Patent Application No. 202410757501.8 filed on June 13, 2024, and entitled "SYSTEM FOR INSPECTING BATTERY CELL INSULATION FILM AND METHOD FOR SAME", the entire content of which is incorporated herein by reference.

### TECHNICAL FIELD

The present application relates to the field of battery technology, and in particular to a system for inspecting a battery cell insulation film and a method for same.

### BACKGROUND

Battery technology has always been an important research direction in the field of new energy, and its applications in portable electronic devices, electric vehicles, renewable energy and other aspects are becoming increasingly widespread. In order to improve the quality of batteries, it is particularly important to inspect battery cells during manufacturing. Unqualified quality of insulation films of jelly rolls is one of important reasons for unqualified battery quality in the battery manufacturing process. The common detection method for insulation film defects is manual visual inspection, which has low detection efficiency and inaccurate detection results, and is prone to the risk of missed detection.

### SUMMARY

Embodiments of the present application provide a system for inspecting a battery cell insulation film and a method for same to solve the technical problem of low defect detection efficiency and inaccurate results of insulation films.

According to a first aspect, an embodiment of the present application provides a system for inspecting a battery cell insulation film, including:
a transfer mechanism, including a base, a sliding table, a first clamping jaw and a second clamping jaw, where the first clamping jaw and the second clamping jaw are respectively arranged on two sides of the base along a first direction, and the sliding table is arranged on the base and is capable of sliding on the base from a position of the first clamping jaw to a position of the second clamping jaw;
first to fifth image capturing assemblies, where in a case that the first clamping jaw places a battery cell on the sliding table and the sliding table transfers the battery cell to a first image capturing position, the first image capturing assembly located on a side of the battery cell facing away from the base acquires an image of a first large surface of the battery cell, and the second image capturing assembly and the third image capturing assembly located on two sides of the battery cell along a second direction respectively acquire images of a first side surface and a second side surface of the battery cell, where the second direction is perpendicular to the first direction; and in a case that the sliding table transfers the battery cell to a second image capturing position and the second clamping jaw grips the battery cell, the fourth image capturing assembly located on a side of the battery cell facing away from the second clamping jaw acquires an image of a bottom support surface of the battery cell, and the fifth image capturing assembly located on a side of the battery cell close to the base acquires an image of a second large surface of the battery cell; and
an upper computer configured to detect whether an insulation film of the battery cell has a defect according to the images of the first large surface, the first side surface, the second side surface, the second large surface and the bottom support surface, where the images include a first exposure image and a second exposure image, and an exposure level of the first exposure image is greater than an exposure level of the second exposure image.

In this embodiment, the battery cell can be transferred through cooperation of the first clamping jaw, the sliding table and the second clamping jaw. The battery cell is transferred to the first image capturing position through the sliding table, so that at the first image capturing position, the first to third image capturing assemblies respectively located at positions corresponding to three surfaces of the battery cell can acquire the images of the first large surface, the first side surface and the second side surface, and then the battery cell is transferred to the second image capturing position through the sliding table. The second clamping jaw grips the battery cell, and at this time the fourth and fifth image capturing assemblies respectively located at positions corresponding to the other two surfaces of the battery cell can acquire the images of the bottom support surface and the second large surface. In this way, the images of five surfaces of the battery cell with different exposure levels can be acquired during translation and transferring of the battery cell, so that the acquisition of the images is more efficient and convenient. In addition, the upper computer can detect whether the insulation film of the battery cell has a defect according to these images, replacing manual visual inspection, realizing efficient and accurate defect detection of the battery cell insulation film, and improving the yield rate.

In some embodiments, the transfer mechanism further includes a bracket, and the bracket is arranged on the base and is located between the first clamping jaw and the second clamping jaw;
the first image capturing assembly is arranged on a side of the bracket facing away from the base;
the second image capturing assembly and the third image capturing assembly are respectively arranged on two sides of the bracket along the second direction;
the fourth image capturing assembly is arranged on a side of the bracket facing away from the second clamping jaw; and
a through hole is provided at a position on the base corresponding to the second clamping jaw, and the fifth image capturing assembly is arranged at a position on the base corresponding to the through hole.

In this way, the first to fourth image capturing assemblies can be respectively arranged on sides of the bracket corresponding to different surfaces of the battery cell, and the fifth image capturing assembly can be arranged on the base, so that the first to fifth image capturing assemblies can be respectively located at positions corresponding to five surfaces of the battery cell. In addition to efficiently acquiring the images of the five surfaces of the battery cell, this offers a more compact structure, thereby effectively saving the overall space of the system.

In some embodiments, each image capturing assemblies includes a strip light source and a camera; and
in a case that the battery cell is located at the first image capturing position or the second image capturing position, the strip light source is arranged between the camera and the battery cell, and a light emitting surface of the strip light source faces towards a surface of the respective corresponding battery cell.

In this way, the strip light source can illuminate the respective corresponding battery cell surface, so that the camera can more clearly acquire images of different exposure levels of the battery cell surface, laying a foundation for subsequent accurate defect detection of the battery cell insulation film.

In some embodiments, a light emitting surface of the strip light source forms an included angle with a plane on which the base is located.

In this way, on the one hand, the emitted light of the strip light source can more accurately illuminate the surface of the respective corresponding battery cell, so that when the camera captures an image of the surface of the battery cell, the lighting condition is excellent, and clearer images of different exposure levels can be acquired. On the other hand, the arrangement of the strip light source can avoid the shooting range of the camera, and the strip light source will not mistakenly appear in the image acquired by the camera, further improving the accuracy of images of various surfaces of the battery cell, thereby improving the accuracy of subsequent detection results.

In some embodiments, a slide rail is arranged on the base along the first direction, and the sliding table is capable of sliding along the slide rail.

In this way, the sliding table is capable of sliding along the slide rail, the sliding path is more precise, and the sliding is smoother, so that the battery cell can be more accurately transferred to the first image capturing position and the second image capturing position, and the first to fifth image capturing assemblies can more accurately capture images of various surfaces of the battery cell, thereby laying a foundation for subsequent accurate defect detection of the battery cell insulation film.

In some embodiments, in a case that the upper computer detects that the insulation film of the battery cell has a defect, the second clamping jaw moves the battery cell to a target position, and the target position is a position for placing a defective battery cell.

In this way, the second clamping jaw can move a battery cell with a defect to the position for placing a defective battery cell for rework or destruction, thereby improving the yield rate of batteries.

In some embodiments, the upper computer is further configured to:
perform template positioning on first exposure images of the first large surface, the first side surface, the second side surface and the second large surface to obtain template matching information of the battery cell, where a template indicates a relative position feature between a top cover and a preset defect detection region of the battery cell, and the preset defect detection region includes at least one of regions for spacing detection, welding mark detection, insulation film lifting detection, blue glue detection, wire drawing detection and dirt detection;
determine a defect detection region from the images of the first large surface, the first side surface, the second side surface and the second large surface according to the template matching information; and
detect whether the insulation film of the battery cell has a defect according to a morphological feature and grayscale feature of the defect detection region.

In this way, template positioning can be performed through the first exposure images of the first large surface, the first side surface, the second side surface and the second large surface to match the defect detection region. Then, spacing detection, welding mark detection, insulation film lifting detection, blue glue detection, wire drawing detection and dirt detection are performed according to the morphological feature and grayscale feature of the defect detection region, realizing efficient and accurate defect detection of the battery cell insulation film and improving the yield rate.

In some embodiments, in a case that the defect detection region is a spacing detection region, the upper computer is further configured to:
determine N welding marks according to the morphological feature and grayscale feature of the defect detection region, where N is an integer greater than 1;
extract N segments of top cover edge line and N segments of insulation film edge line from the defect detection region according to the N welding marks;
determine N spacings between the insulation film and the top cover according to each segment of top cover edge line and each segment of insulation film edge line;
sort the N spacings to obtain a spacing sequence;
screen M spacings from the spacing sequence, where M is an integer greater than 1 and M is less than N; and
determine, according to the M spacings and a preset spacing threshold range, whether a spacing between the insulation film and the top cover of the battery cell does not exceed a spacing threshold range.

In this way, on the one hand, the top cover edge line and the insulation film edge line can be segmented according to the number of welding marks, and the spacing between each pair of segments can be determined, so that whether the spacing between the insulation film and the top cover is qualified can be detected according to multiple spacings, further improving the accuracy of spacing detection. On the other hand, the M spacings can be screened from the N spacings for detection, saving computing resources and improving detection efficiency.

In some embodiments, the upper computer is further configured to:
extract a bottom support surface region and a bottom support sheet region according to a first exposure image of the bottom support surface; and
determine whether a bottom support sheet is offset relative to the bottom support surface according to the bottom support surface region, the bottom support sheet region and a preset region width threshold.

In this way, whether the bottom support sheet is offset relative to the bottom support surface can be detected through the first exposure image of the bottom support surface, realizing efficient and accurate defect detection of the battery cell insulation film and improving the yield rate.

In some embodiments, the upper computer is further configured to:
acquire a first region according to a second exposure image of the bottom support surface and a region of interest;
perform dilation processing on the first region to obtain a dilated region;
perform difference processing on the region of interest and the dilated region to obtain a second region;
perform difference processing on the second region and a central interference region to obtain a decarburization detection region, where the central interference region is a rectangular region generated in a middle of the second region; and
determine, according to a morphological feature and grayscale feature of the decarburization detection region, whether an electrode sheet is exposed at a bottom of the battery cell.

In this way, whether an electrode sheet is exposed at the bottom of the battery cell can be detected through the second exposure image of the bottom support surface, realizing efficient and accurate defect detection of the battery cell insulation film and improving the yield rate.

According to a second aspect, an embodiment of the present application provides a method for inspecting a battery cell insulation film, applied to the system for inspecting a battery cell insulation film according to the first aspect, where the method includes:
transferring a battery cell through a transfer mechanism, where the transfer mechanism includes a base, a sliding table, a first clamping jaw and a second clamping jaw;
in a case that the first clamping jaw places the battery cell on the sliding table and the sliding table transfers the battery cell to a first image capturing position, acquiring an image of a first large surface of the battery cell through a first image capturing assembly located on a side of the battery cell facing away from the base, and acquiring images of a first side surface and a second side surface of the battery cell respectively through a second image capturing assembly and a third image capturing assembly located on two sides of the battery cell;
moving the battery cell from the first image capturing position to a second image capturing position through the sliding table;
in a case that the sliding table transfers the battery cell to the second image capturing position and the second clamping jaw grips the battery cell, acquiring, by a fourth image capturing assembly located on a side of the battery cell facing away from the second clamping jaw, an image of a bottom support surface of the battery cell, and acquiring, by a fifth image capturing assembly located on a side of the battery cell close to the base, an image of a second large surface of the battery cell; and
detecting, by an upper computer, whether an insulation film of the battery cell has a defect according to the images of the first large surface, the first side surface, the second side surface, the second large surface and the bottom support surface, where the images include a first exposure image and a second exposure image, and an exposure level of the first exposure image is greater than an exposure level of the second exposure image.

In this embodiment, the battery cell can be transferred through cooperation of the first clamping jaw, the sliding table and the second clamping jaw. The battery cell is transferred to the first image capturing position through the sliding table, so that at the first image capturing position, the first to third image capturing assemblies respectively located at positions corresponding to three surfaces of the battery cell can acquire the images of the first large surface, the first side surface and the second side surface, and then the battery cell is transferred to the second image capturing position through the sliding table. The second clamping jaw grips the battery cell, and at this time the fourth and fifth image capturing assemblies respectively located at positions corresponding to the other two surfaces of the battery cell can acquire the images of the bottom support surface and the second large surface. In this way, the images of five surfaces of the battery cell with different exposure levels can be acquired during translation and transferring of the battery cell, so that the acquisition of the images is more efficient and convenient. In addition, the upper computer can detect whether the insulation film of the battery cell has a defect according to these images, replacing manual visual inspection, realizing efficient and accurate defect detection of the battery cell insulation film, and improving the yield rate.

In some embodiments, the detecting whether an insulation film of the battery cell has a defect according to the images of the first large surface, the first side surface, the second side surface, the second large surface and the bottom support surface includes:
performing template positioning on first exposure images of the first large surface, the first side surface, the second side surface and the second large surface to obtain template matching information of the battery cell, where a template indicates a relative position feature between a top cover and a preset defect detection region of the battery cell, and the preset defect detection region includes at least one of regions for spacing detection, welding mark detection, insulation film lifting detection, blue glue detection, wire drawing detection and dirt detection;
determining a defect detection region from the images of the first large surface, the first side surface, the second side surface and the second large surface according to the template matching information; and
detecting whether the insulation film of the battery cell has a defect according to a morphological feature and grayscale feature of the defect detection region.

In this way, template positioning can be performed through the first exposure images of the first large surface, the first side surface, the second side surface and the second large surface to match the defect detection region. Then, spacing detection, welding mark detection, insulation film lifting detection, blue glue detection, wire drawing detection and dirt detection are performed according to the morphological feature and grayscale feature of the defect detection region, realizing efficient and accurate defect detection of the battery cell insulation film and improving the yield rate.

In some embodiments, in a case that the defect detection region is a spacing detection region, the detecting whether the insulation film of the battery cell has a defect according to a morphological feature and grayscale feature of the defect detection region includes:
determining N welding marks according to the morphological feature and grayscale feature of the defect detection region, where N is an integer greater than 1;
extracting N segments of top cover edge line and N segments of insulation film edge line from the defect detection region according to the N welding marks;
determining N spacings between the insulation film and the top cover according to each segment of top cover edge line and each segment of insulation film edge line;
sorting the N spacings to obtain a spacing sequence;
screening M spacings from the spacing sequence, where M is an integer greater than 1 and M is less than N; and
determining, according to the M spacings and a preset spacing threshold range, whether a spacing between the insulation film and the top cover of the battery cell does not exceed a spacing threshold range.

In this way, on the one hand, the top cover edge line and the insulation film edge line can be segmented according to the number of welding marks, and the spacing between each pair of segments can be determined, so that whether the spacing between the insulation film and the top cover is qualified can be detected according to multiple spacings, further improving the accuracy of spacing detection. On the other hand, the M spacings can be screened from the N spacings for detection, saving computing resources and improving detection efficiency.

In some embodiments, the detecting whether an insulation film of the battery cell has a defect according to the images of the first large surface, the first side surface, the second side surface, the second large surface and the bottom support surface includes:
extracting a bottom support surface region and a bottom support sheet region according to a first exposure image of the bottom support surface; and
determining whether a bottom support sheet is offset relative to the bottom support surface according to the bottom support surface region, the bottom support sheet region and a preset region width threshold.

In this way, whether the bottom support sheet is offset relative to the bottom support surface can be detected through the first exposure image of the bottom support surface, realizing efficient and accurate defect detection of the battery cell insulation film and improving the yield rate.

In some embodiments, the detecting whether an insulation film of the battery cell has a defect according to the images of the first large surface, the first side surface, the second side surface, the second large surface and the bottom support surface includes:
acquiring a first region according to a second exposure image of the bottom support surface and a region of interest;
performing dilation processing on the first region to obtain a dilated region;
performing difference processing on the region of interest and the dilated region to obtain a second region;
performing difference processing on the second region and a central interference region to obtain a decarburization detection region, where the central interference region is a rectangular region generated in a middle of the second region; and
determining, according to a morphological feature and grayscale feature of the decarburization detection region, whether an electrode sheet is exposed at a bottom of the battery cell.

In this way, whether an electrode sheet is exposed at the bottom of the battery cell can be detected through the second exposure image of the bottom support surface, realizing efficient and accurate defect detection of the battery cell insulation film and improving the yield rate.

In some embodiments, after the detecting, by an upper computer, whether an insulation film of the battery cell has a defect according to the images of the first large surface, the first side surface, the second side surface, the second large surface and the bottom support surface, the method further includes:
in a case that the upper computer detects that the insulation film of the battery cell has a defect, moving the battery cell to a target position through the second clamping jaw, where the target position is a position for placing a defective battery cell.

In this way, the second clamping jaw can move a battery cell with a defect to the position for placing a defective battery cell for rework or destruction, thereby improving the yield rate of batteries.

According to a third aspect, an embodiment of the present application provides an electronic device. The device includes: a processor and a memory storing program instructions; and the processor implements the method of the second aspect when executing the program instructions.

According to a fourth aspect, an embodiment of the present application provides a machine-readable storage medium, where program instructions are stored on the machine-readable storage medium, and when the program instructions are executed by a processor, the method of the second aspect is implemented.

According to a fifth aspect, an embodiment of the present application provides a computer program product, where instructions in the computer program product, when executed by a processor of an electronic device, cause the electronic device to perform the method of the second aspect.

The above description is only an overview of the technical solutions of the present application. In order to more clearly understand the technical means of the present application, the technical means can be implemented in accordance with the content of the specification. In order to make the above and other objects, features and advantages of the present application more obvious and understandable, specific embodiments of the present application are specifically listed below.

### BRIEF DESCRIPTION OF DRAWINGS

The features, advantages and technical effects of exemplary embodiments of the present application will be described below with reference to the accompanying drawings.
FIG. 1 is a first hardware schematic diagram of a system for inspecting a battery cell insulation film provided by an embodiment of the present application;
FIG. 2 is a second hardware schematic diagram of a system for inspecting a battery cell insulation film provided by an embodiment of the present application;
FIG. 3 is a schematic diagram of an inspection flow of a system for inspecting a battery cell insulation film provided by an embodiment of the present application;

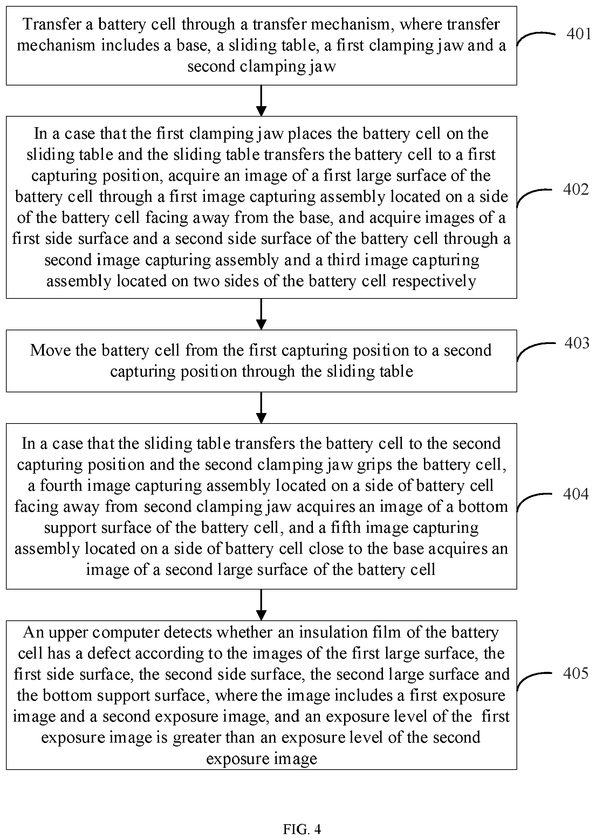

FIG. 4 is a schematic flowchart of a method for inspecting a battery cell insulation film provided by an embodiment of the present application;
FIG. 5 is a flowchart of a specific scenario embodiment of a method for inspecting a battery cell insulation film provided by an embodiment of the present application; and
FIG. 6 is a schematic structural diagram of an electronic device provided by an embodiment of the present application.

In the accompanying drawings, the drawings are not necessarily drawn to actual scale:
110. transfer mechanism; 111. base; 112. sliding table; 113. first clamping jaw; 114. second clamping jaw; 115. bracket; 116. slide rail;
121. first image capturing assembly; 122. second image capturing assembly; 123. third image capturing assembly; 124. fourth image capturing assembly; 125. fifth image capturing assembly;
131. strip light source; and 132. camera.

### DESCRIPTION OF EMBODIMENTS

The embodiments of the present application will be further described in detail below with reference to the accompanying drawings and examples. The detailed description of the following embodiments and the accompanying drawings are used to exemplarily illustrate the principles of the present application, but cannot be used to limit the scope of the present application, that is, the present application is not limited to the described embodiments.

In the description of the present application, it should be noted that, unless otherwise specified, the meaning of "plurality" is two or more. The orientation or positional relationship indicated by the terms "upper", "lower", "left", "right", "inner", "outer" and the like is only for the convenience of describing the present application and simplifying the description, and does not indicate or imply that the referred device or element must have a specific orientation, be constructed and operated in a specific orientation, and therefore cannot be understood as a limitation on the present application. In addition, the terms "first", "second", "third" and the like are only used for descriptive purposes and cannot be understood as indicating or implying relative importance. "Vertical" is not strictly vertical, but within the allowable range of error. "Parallel" is not strictly parallel, but within the allowable range of error.

Reference to "embodiment" in the present application means that a specific feature, structure or characteristic described in conjunction with the embodiment may be included in at least one embodiment of the present application. The appearance of the phrase in various positions in the specification does not necessarily refer to the same embodiment, nor is it an independent or alternative embodiment that is mutually exclusive with other embodiments. It is explicitly and implicitly understood by those skilled in the art that the embodiments described in the present application can be combined with other embodiments.

Power batteries are a key component of new energy vehicles, and the quality of power batteries largely affects the driving range, charging efficiency and vehicle driving stability of new energy vehicles. At present, square batteries are the most common lithium-ion battery structure. In the manufacturing process of square lithium batteries, after a jelly roll is manufactured, it needs to be loaded into a hard square aluminum shell to complete assembly. Due to the hardness of the aluminum shell, there is a risk of scratching the jelly roll. Therefore, before loading the jelly roll into the aluminum shell, it is necessary to cover the jelly roll with a soft and flexible insulation film, such as Mylar (Mylar) film, to prevent the aluminum shell from damaging the jelly roll. In the single machine equipment for wrapping the insulation film, the jelly roll is placed flat on the turntable station. While being gripped by the clamping jaw, the jelly roll is wrapped according to the specified action, and then high-temperature hotmelt bonded with one surface of the top cover bracket, causing the jelly roll to be tightly adhered to the top cover bracket, so as to achieve the purpose of wrapping the jelly roll. In the production process of wrapping jelly rolls with jelly rolls, defects such as poor spacing, poor welding marks, incomplete wrapping, falling off, glue misalignment, wrinkles, surface contamination, and welding mark wire drawing are prone to occur. At present, the most common detection method for insulation film defect problems is manual visual inspection. This method not only has low detection efficiency, but also has low detection accuracy, and is prone to the risk of missed detection.

In view of this, an embodiment of the present application provides a system for inspecting a battery cell insulation film and a method for same to solve the above technical problems. The system for inspecting a battery cell insulation film provided by the embodiments of the present application is first introduced below.

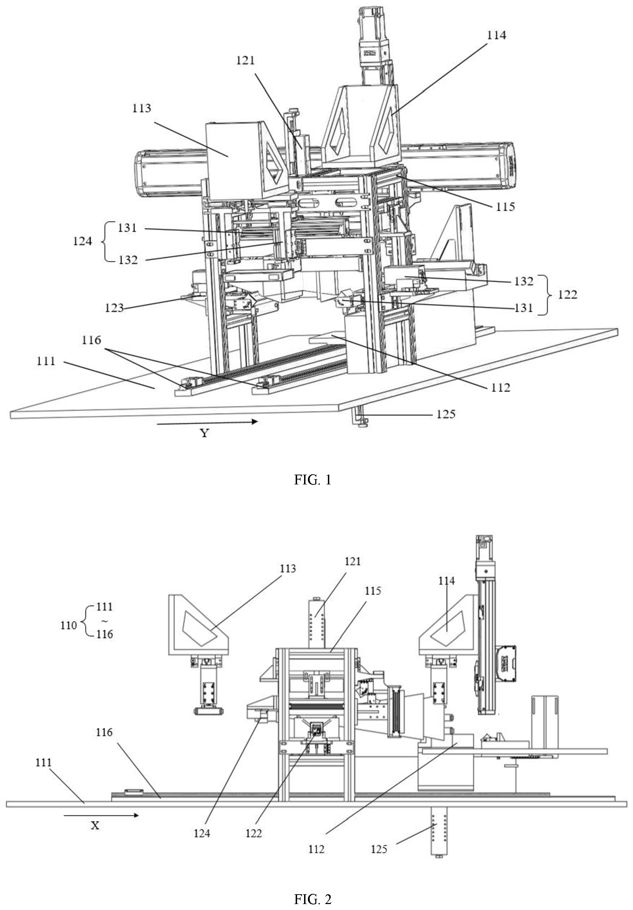

Refer to FIG. 1. FIG. 1 is a schematic structural diagram of a system for inspecting a battery cell insulation film provided by an embodiment of the present application.

The system for inspecting a battery cell insulation film may include:
a transfer mechanism 110, including a base 111, a sliding table 112, a first clamping jaw 113 and a second clamping jaw 114, where the first clamping jaw 113 and the second clamping jaw 114 are respectively arranged on two sides of the base 111 along a first direction, and the sliding table 112 is arranged on the base 111 and is capable of sliding on the base 111 from a position of the first clamping jaw 113 to a position of the second clamping jaw 114;
first to fifth image capturing assemblies, where in a case that the first clamping jaw 113 places a battery cell on the sliding table 112 and the sliding table 112 transfers the battery cell to a first image capturing position, the first image capturing assembly 121 located on a side of the battery cell facing away from the base 111 acquires an image of a first large surface of the battery cell, and the second image capturing assembly 122 and the third image capturing assembly 123 located on two sides of the battery cell along a second direction respectively acquire images of a first side surface and a second side surface of the battery cell, where the second direction is perpendicular to the first direction; and in a case that the sliding table 112 transfers the battery cell to a second image capturing position and the second clamping jaw 114 grips the battery cell, the fourth image capturing assembly 124 located on a side of the battery cell facing away from the second clamping jaw 114 acquires an image of a bottom support surface of the battery cell, and the fifth image capturing assembly 125 located on a side of the battery cell close to the base 111 acquires an image of a second large surface of the battery cell; and
an upper computer configured to detect whether an insulation film of the battery cell has a defect according to the images of the first large surface, the first side surface, the second side surface, the second large surface and the bottom support surface, where the images include a first exposure image and a second exposure image, and an exposure level of the first exposure image is greater than an exposure level of the second exposure image.

As shown in FIG. 1 and FIG. 2, in this embodiment, the system for inspecting a battery cell insulation film may include the transfer mechanism 110, the first to fifth image capturing assemblies and the upper computer. The transfer mechanism 110 may include the base 111, the sliding table 112, the first clamping jaw 113 and the second clamping jaw 114. The first clamping jaw 113 and the second clamping jaw 114 may be respectively arranged on two sides of the base 111 along the first direction (X). The sliding table 112 is arranged on the base 111 and is capable of sliding on the base 111 from the position of the first clamping jaw 113 to the position of the second clamping jaw 114.

The first clamping jaw 113 can grip the battery cell and place it on the sliding table 112, and at this time the second large surface of the battery cell is in contact with a table surface of the sliding table 112. The sliding table 112 carries the battery cell to slide from the first clamping jaw 113 toward the second clamping jaw 114 to transfer the battery cell to the first image capturing position. It can be understood that the first image capturing position may be a certain position located between the first clamping jaw 113 and the second clamping jaw 114.

In a case that the battery cell is at the first image capturing position, the first image capturing assembly 121 may be located on a side of the battery cell facing away from the base 111 for acquiring an image of the first large surface of the battery cell. The second image capturing assembly 122 and the third image capturing assembly 123 may be respectively located on two sides of the battery cell along the second direction (Y) for acquiring images of the first side surface and the second side surface of the battery cell. In other words, the first image capturing assembly 121, the second image capturing assembly 122 and the third image capturing assembly 123 may be on the same plane parallel to the second direction.

The sliding table 112 continues to carry the battery cell to slide toward the second clamping jaw 114 so as to transfer the battery cell to the second image capturing position. It can be understood that the second image capturing position may be a position corresponding to the second clamping jaw 114. At this time, the second clamping jaw 114 can grip the battery cell, and the sliding table 112 slides toward the first clamping jaw 113 to carry the next battery cell, so that the battery cell can be suspended at the second image capturing position to expose the second large surface of the battery cell.

In a case that the battery cell is at the second image capturing position, the fourth image capturing assembly may be located on a side of the battery cell facing away from the second clamping jaw 114 for acquiring an image of the bottom support surface of the battery cell. The fifth image capturing assembly may be located on a side of the battery cell close to the base 111 for acquiring an image of the second large surface of the battery cell.

The images may include a first exposure image and a second exposure image. It can be understood that the first exposure image and the second exposure image have different exposure levels, and an exposure level of the first exposure image is greater than an exposure level of the second exposure image. For example, the first exposure image may be a high exposure image, and the second exposure image may be a low exposure image.

The upper computer (not shown in the figure) can detect whether the insulation film of the battery cell has a defect according to the images of the first large surface, the first side surface, the second side surface, the second large surface and the bottom support surface. The defect detection may include at least one of bottom support sheet offset detection, bottom electrode sheet exposure detection, spacing detection, welding mark detection, insulation film lifting detection, blue glue detection, wire drawing detection and dirt detection.

Whether the insulation film of the battery cell has a defect can be determined by means of binarization, fixed threshold, morphology, region screening, feature screening, or the like. Binarization is an image processing technology that is realized by a fixed threshold, that is, pixel values in an image can be converted into black and white colors. A fixed threshold is set. In general cases, pixels with pixel values greater than the fixed threshold are set to white, and pixels with pixel values less than the fixed threshold are set to black. Binarization is often used in the fields of image segmentation, target detection and character recognition. Morphology is an image processing technology that processes images by using specific structural elements (such as circles, and squares). It is often used in the fields of image segmentation, target detection and character recognition. The morphology in the embodiments of the present application is for a pre-drawn detection region. Pixels meeting the requirements are screened out according to a threshold. These pixels form an irregular image of a certain shape. When dilation or erosion processing is performed according to morphology, changes can be made on the basis of the original shape. Region screening or feature screening is an image processing technology. The region screening or feature screening in the embodiments of the present application is to screen out pixels meeting the threshold requirements within a determined detection region. Corresponding defect detection can be performed according to the screened pixels to obtain a detection result.

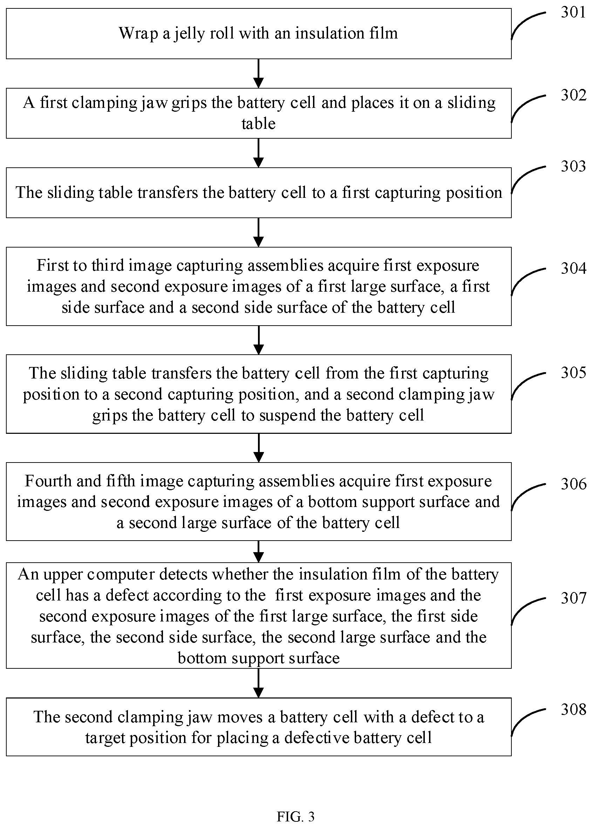

As shown in FIG. 3, the detection steps of the system for inspecting a battery cell insulation film can be as follows:
Step 301. Wrap a jelly roll with an insulation film.

Step 302. A first clamping jaw 113 grips the battery cell and places it on a sliding table 112.

Step 303. The sliding table 112 transfers the battery cell to a first image capturing position.

Step 304. First to third image capturing assemblies acquire first exposure images and second exposure images of a first large surface, a first side surface and a second side surface of the battery cell.

Step 305. The sliding table 112 transfers the battery cell from the first image capturing position to a second image capturing position, and a second clamping jaw 114 grips the battery cell to suspend the battery cell.

Step 306. Fourth and fifth image capturing assemblies acquire first exposure images and second exposure images of a bottom support surface and a second large surface of the battery cell.

Step 307. An upper computer detects whether an insulation film of the battery cell has a defect according to the first exposure images and second exposure images of the first large surface, the first side surface, the second side surface, the second large surface and the bottom support surface.

Step 308. The second clamping jaw 114 moves a battery cell with a defect to a target position for placing a defective battery cell.

In this embodiment, the battery cell can be transferred through cooperation of the first clamping jaw 113, the sliding table 112 and the second clamping jaw 114. The battery cell is transferred to the first image capturing position through the sliding table 112, so that at the first image capturing position, the first to third image capturing assemblies respectively located at positions corresponding to three surfaces of the battery cell can acquire the images of the first large surface, the first side surface and the second side surface, and then the battery cell is transferred to the second image capturing position through the sliding table 112. The second clamping jaw 114 grips the battery cell, and at this time the fourth and fifth image capturing assemblies respectively located at positions corresponding to the other two surfaces of the battery cell can acquire the images of the bottom support surface and the second large surface. In this way, the images of five surfaces of the battery cell with different exposure levels can be acquired during translation and transferring of the battery cell, so that the acquisition of the images is more efficient and convenient. In addition, the upper computer can detect whether the insulation film of the battery cell has a defect according to these images, replacing manual visual inspection, realizing efficient and accurate defect detection of the battery cell insulation film, and improving the yield rate.

In some embodiments, the transfer mechanism 110 further includes a bracket 115, and the bracket 115 is arranged on the base 111 and is located between the first clamping jaw 113 and the second clamping jaw 114;
the first image capturing assembly 121 is arranged on a side of the bracket 115 facing away from the base 111;
the second image capturing assembly 122 and the third image capturing assembly 123 are respectively arranged on two sides of the bracket 115 along the second direction;
the fourth image capturing assembly 124 is arranged on a side of the bracket 115 facing away from the second clamping jaw 114; and
a through hole is provided at a position on the base 111 corresponding to the second clamping jaw 114, and the fifth image capturing assembly 125 is arranged at a position on the base 111 corresponding to the through hole.

In this embodiment, as shown in FIG. 1 and FIG. 2, the transfer mechanism 110 may further include the bracket 115 arranged on the base 111 and located between the first clamping jaw 113 and the second clamping jaw 114. The bracket 115 has a hollow structure, and the sliding table 112 can pass through the bracket 115 when sliding.

FIG. 2 is used as an example. The first clamping jaw 113 may be located on the left side, the second clamping jaw 114 may be located on the right side, and the base 111 may be located on the lower side. In this case, the first image capturing assembly 121 may be arranged on an upper side of the bracket 115. The second image capturing assembly 122 and the third image capturing assembly 123 may be respectively arranged on front and rear sides of the bracket 115. The fourth image capturing assembly 124 may be arranged on a left side of the bracket 115. In this way, the first to fourth image capturing assemblies can respectively correspond to the upper, front, rear and left four surfaces of the battery cell, and are collectively arranged on the bracket 115, with a compact structure and a small installation area occupied.

A through hole is provided at a position on the base 111 corresponding to the second clamping jaw 114, and the fifth image capturing assembly 125 may be arranged at a position on the base 111 corresponding to the through hole, that is, corresponding to a lower surface of the battery cell. As mentioned above, the battery cell is located at the second image capturing position and is gripped by the second clamping jaw 114 to be suspended. At this time, the fifth image capturing assembly can capture an image upward through the through hole.

It can be understood that the surface on the right side of the battery cell may be a surface including an electrode sheet, and does not need to capture an image for insulation film defect detection.

In this way, the first to fourth image capturing assemblies can be respectively arranged on sides of the bracket 115 corresponding to different surfaces of the battery cell, and the fifth image capturing assembly 125 can be arranged on the base 111, so that the first to fifth image capturing assemblies can be respectively located at positions corresponding to five surfaces of the battery cell. In addition to efficiently acquiring the images of the five surfaces of the battery cell, this offers a more compact structure, thereby effectively saving the overall space of the system.

In some embodiments, each image capturing assemblies includes a strip light source 131 and a camera 132; and
in a case that the battery cell is located at the first image capturing position or the second image capturing position, the strip light source 131 is arranged between the camera 132 and the battery cell, and a light emitting surface of the strip light source 131 faces towards a surface of the respective corresponding battery cell.

In this embodiment, the strip light source 131 can provide high brightness and uniform light. In cooperation with the camera 132, image acquisition of a fixed-point stable battery cell can be realized. Higher quality images are beneficial to improving the accuracy of defect detection.

As shown in FIG. 1, in a case that the battery cell is located at the first image capturing position or the second image capturing position, the strip light source 131 may be located between the camera 132 and the battery cell, and its light emitting surface faces towards a surface of the respective corresponding battery cell.

For example, the strip light source 131 of the first image capturing assembly 121 can change the intensity of light emitted from the light emitting surface. The first large surface is illuminated by emitted light of different intensities. The camera 132 of the first image capturing assembly 121 captures an image of the first large surface at different exposure levels to obtain a first exposure image and a second exposure image of the first large surface.

The strip light source 131 of the second image capturing assembly 122 can change the intensity of light emitted from the light emitting surface. The first side surface is illuminated by emitted light of different intensities. The camera 132 of the second image capturing assembly 122 captures an image of the first side surface at different exposure levels to obtain a first exposure image and a second exposure image of the first side surface.

The strip light source 131 of the third image capturing assembly 123 can change the intensity of light emitted from the light emitting surface. The second side surface is illuminated by emitted light of different intensities. The camera 132 of the third image capturing assembly 123 captures an image of the second side surface at different exposure levels to obtain a first exposure image and a second exposure image of the second side surface.

The strip light source 131 of the fourth image capturing assembly 124 can change the intensity of light emitted from the light emitting surface. The bottom support surface is illuminated by emitted light of different intensities. The camera 132 of the fourth image capturing assembly 124 captures an image of the bottom support surface at different exposure levels to obtain a first exposure image and a second exposure image of the bottom support surface.

The strip light source 131 of the fifth image capturing assembly 125 can change the intensity of light emitted from the light emitting surface. The second large surface is illuminated by emitted light of different intensities. The camera 132 of the fifth image capturing assembly 125 captures an image of the second large surface at different exposure levels to obtain a first exposure image and a second exposure image of the second large surface.

In this way, the strip light source 131 can illuminate the respective corresponding battery cell surface, so that the camera 132 can more clearly acquire images of different exposure levels of the battery cell surface, laying a foundation for subsequent accurate defect detection of the battery cell insulation film.

In some embodiments, a light emitting surface of the strip light source 131 forms an included angle with a plane on which the base 111 is located.

In this embodiment, as shown in FIG. 1, the strip light sources 131 and cameras 132 of the first to fourth image capturing assemblies can all be arranged on the bracket 115, and both of the strip light source 131 and camera 132 of the fifth image capturing assembly 125 can also be arranged on the base 111. The strip light sources 131 and the cameras 132 can be arranged alternately along a height direction of the bracket 115. In this case, in order to ensure that the light emitting surfaces of the strip light sources 131 face towards the respective corresponding battery cell surfaces, the light emitting surface can form an included angle with the plane on which the base 111 is located. The angle of the included angle can be 30° to 60°, which can actually be adjusted according to the setting position and the position of the battery cell to ensure that the light emitted from the light emitting surface illuminates the battery cell surface.

In this way, on the one hand, the emitted light of the strip light source 131 can more accurately illuminate the surface of the respective corresponding battery cell, so that when the camera 132 captures an image of the surface of the battery cell, the lighting condition is excellent, and clearer images of different exposure levels can be acquired. On the other hand, the arrangement of the strip light source 131 can avoid the shooting range of the camera 132, and the strip light source 131 will not mistakenly appear in the image acquired by the camera 132, further improving the accuracy of images of various surfaces of the battery cell, thereby improving the accuracy of subsequent detection results.

In some embodiments, a slide rail 116 is arranged on the base 111 along the first direction, and the sliding table 112 is capable of sliding along the slide rail 116.

In this embodiment, as shown in FIG. 1 and FIG. 2, the slide rail 116 is arranged on the base 111 along the first direction (X). One or more slide rails 116 can be provided. As shown in FIG. 1 and FIG. 2, two slide rails 116 can be arranged on the base 111. Two sides of the sliding table 112 can be respectively located on one slide rail 116 and is capable of sliding along the slide rail 116.

In this way, the sliding table 112 is capable of sliding along the slide rail 116, the sliding path is more precise, and the sliding is smoother, so that the battery cell can be more accurately transferred to the first image capturing position and the second image capturing position, and the first to fifth image capturing assemblies can more accurately capture images of various surfaces of the battery cell, thereby laying a foundation for subsequent accurate defect detection of the battery cell insulation film.

In some embodiments, as mentioned above, in a case that the upper computer detects that the insulation film of the battery cell has a defect, the second clamping jaw 114 can move the battery cell to a target position, and the target position is a position for placing a defective battery cell.

In this way, the second clamping jaw 114 can move a battery cell with a defect to the position for placing a defective battery cell for rework or destruction, thereby improving the yield rate of batteries.

In some embodiments, the upper computer is further configured to:
perform template positioning on first exposure images of the first large surface, the first side surface, the second side surface and the second large surface to obtain template matching information of the battery cell, where a template indicates a relative position feature between a top cover and a preset defect detection region of the battery cell, and the preset defect detection region includes at least one of regions for spacing detection, welding mark detection, insulation film lifting detection, blue glue detection, wire drawing detection and dirt detection;
determine a defect detection region from the images of the first large surface, the first side surface, the second side surface and the second large surface according to the template matching information; and
detect whether the insulation film of the battery cell has a defect according to a morphological feature and grayscale feature of the defect detection region.

In this embodiment, a template can be generated through the top cover of the battery cell. The template indicates the relative position feature between the top cover and the preset defect detection region of the battery cell. The preset defect detection region includes at least one of regions for spacing detection, welding mark detection, insulation film lifting detection, blue glue detection, wire drawing detection and dirt detection.

Template positioning can be performed on the first exposure images of the first large surface, the first side surface, the second side surface and the second large surface to extract the template matching information of the battery cell. Then, the defect detection region can be determined from the images of the first large surface, the first side surface, the second side surface and the second large surface according to the template matching information.

The defect detection region being a spacing detection region is used as an example, that is, the spacing detection region covers edges of the top cover and the insulation film, and the top cover edge line and the insulation film edge line can be extracted according to pixels in the defect detection region. For example, affine transformation can be performed on a top cover edge positioning line according to the template matching information. According to the grayscale change direction, edge point extraction is performed in a given rectangular region in a direction perpendicular to the top cover edge positioning line, and finally the top cover edge line is fitted. Similarly, affine transformation can be performed on an insulation film edge positioning line according to the template matching information. According to the grayscale change direction, edge point extraction is performed in a given rectangular region in a direction perpendicular to the insulation film edge positioning line, and finally the insulation film edge line is fitted.

The spacing between the insulation film and the top cover can be determined according to the top cover edge line and the insulation film edge line. For example, an average value of distances from several insulation film edge points to the top cover edge line can be calculated as the spacing between the insulation film and the top cover.

The spacing between the insulation film and the top cover can be compared with the preset spacing threshold range to determine whether the spacing detection passes. For example, if the spacing between the insulation film and the top cover is within the spacing threshold range, the spacing can be considered qualified. If the spacing between the insulation film and the top cover is outside the spacing threshold range, the spacing can be considered unqualified.

The defect detection region being a welding mark detection region is used as an example. A welding mark detection region can be determined from the first exposure images of the first large surface, the first side surface, the second side surface and the second large surface according to the template matching information. For example, affine transformation can be performed on a pre-determined detection frame according to the template matching information, and the welding mark detection region can be determined by making an intersection according to an insulation film edge in the template matching information. The welding mark detection region is a region where a welding mark may exist.

A welding mark region can be determined from the welding mark detection region according to morphological and grayscale features corresponding to welding mark. The area of the welding mark region is compared with a preset welding mark area threshold. If the area of the welding mark region is greater than or equal to the welding mark area threshold, it can be considered that the welding mark detection passes. Conversely, if the area of the welding mark region is less than the welding mark area threshold, it can be considered that the welding mark detection fails.

The defect detection region being an insulation film lifting detection region is used as an example. An insulation film lifting detection region can be determined from the first exposure images of the first large surface, the first side surface, the second side surface and the second large surface according to the template matching information. For example, affine transformation can be performed on a top cover edge positioning line according to the template matching information. According to the grayscale change direction, edge point extraction is performed in a given rectangular region in a direction perpendicular to the top cover edge positioning line, and finally the top cover edge line is fitted. The top cover edge line is used as a reference, and the insulation film lifting detection region is determined according to a battery direction and a straight line offset. The insulation film lifting detection region is a region where an insulation film lifting defect may exist.

Whether a lifting region exists in the insulation film lifting detection region can be determined according to morphological and grayscale features corresponding to insulation film lifting. If the lifting region exists, it can be considered that the insulation film has lifted, and the insulation film lifting detection fails. Conversely, if the lifting region does not exist, it can be considered that the insulation film has not lifted, and the insulation film lifting detection passes.

The defect detection region being a blue glue detection region is used as an example. Affine transformation can be performed on a pre-determined detection frame according to the template matching information, and a blue glue detection region is determined from the second exposure images of the first side surface, the second side surface and the bottom support surface. The blue glue detection region is a region where blue glue may be detected.

Whether a blue glue region exists in the blue glue detection region can be determined through screening according to morphological and grayscale features corresponding to blue glue. If a blue glue region exists, it can be considered that the blue glue detection passes. Conversely, if no blue glue region exists, it can be considered that the blue glue detection fails.

The defect detection region being a wire drawing detection region is used as an example. Since the first exposure image and the second exposure image only have different exposure levels and the positions of various components of the battery cell in the images are consistent, the position of the top cover edge in the second exposure images of the first large surface, the first side surface, the second side surface and the second large surface can be determined according to the template matching information. Then, the top cover edge line can be extracted according to pixels at the corresponding position. For example, affine transformation can be performed on a top cover edge positioning line according to the template matching information. According to the grayscale change direction, edge point extraction is performed in a given rectangular region in a direction perpendicular to the top cover edge positioning line, and finally the top cover edge line is fitted. A wire drawing detection region can be determined from the second exposure images of the first large surface, the first side surface, the second side surface and the second large surface according to the top cover edge line. For example, the top cover edge line is used as a reference, and the wire drawing detection region is determined according to a battery direction and a straight line offset. The wire drawing detection region is a region where a wire drawing defect may exist.

Whether a wire drawing region exists in the wire drawing detection region can be determined according to morphological and grayscale features corresponding to wire drawing. If the wire drawing region exists, it can be considered that the battery cell has a wire drawing defect, and the wire drawing detection fails. Conversely, if the wire drawing region does not exist, it can be considered that the battery cell does not have a wire drawing defect, and the wire drawing detection passes.

The defect detection region being a dirt detection region is used as an example. Affine transformation can be performed on a pre-determined detection frame according to the template matching information, and a dirt detection region is determined from the second exposure images of the first large surface and the second large surface. The dirt detection region is a region where dirt may be detected.

Whether a dirt region exists in the dirt detection region through screening can be determined according to morphological and grayscale features corresponding to stain. If a dirt region exists, it can be considered that the dirt detection fails. Conversely, if no dirt region exists, it can be considered that the dirt detection passes.

In this way, template positioning can be performed through the first exposure images of the first large surface, the first side surface, the second side surface and the second large surface to match the defect detection region. Then, spacing detection, welding mark detection, insulation film lifting detection, blue glue detection, wire drawing detection and dirt detection are performed according to the morphological feature and grayscale feature of the defect detection region, realizing efficient and accurate defect detection of the battery cell insulation film and improving the yield rate.

In some embodiments, in a case that the defect detection region is a spacing detection region, the upper computer is further configured to:
determine N welding marks according to the morphological feature and grayscale feature of the defect detection region, where N is an integer greater than 1;
extract N segments of top cover edge line and N segments of insulation film edge line from the defect detection region according to the N welding marks;
determine N spacings between the insulation film and the top cover according to each segment of top cover edge line and each segment of insulation film edge line;
sort the N spacings to obtain a spacing sequence;
screen M spacings from the spacing sequence, where M is an integer greater than 1 and M is less than N; and
determine, according to the M spacings and a preset spacing threshold range, whether a spacing between the insulation film and the top cover of the battery cell does not exceed a spacing threshold range.

In this embodiment, the N welding marks can be determined according to the morphological feature and grayscale feature of the defect detection region. The top cover edge line and insulation film edge line can be segmented according to the number of welding marks. If there are N welding marks, N segments of top cover edge line and N segments of insulation film edge line are extracted.

Spacings can be calculated according to one-to-one corresponding top cover edge line segments and insulation film edge line segments to obtain N spacings between the insulation film and the top cover, and then the N spacings are sorted in ascending order to obtain a spacing sequence.

The M spacings can be screened from the spacing sequence, and the M spacings are compared with a preset spacing threshold to determine whether the spacing detection passes. The value of M can be set according to actual needs and is not specifically limited here.

For example, the spacing sequence may include spacing 1, spacing 2, spacing 3... and spacing n. The M spacings can be randomly screened, or the M spacings can be extracted from the middle, or weight values can be pre-assigned to spacings at various positions in the spacing sequence, and the M spacings are extracted according to the weight values. The specific method can be set according to actual needs and is not specifically limited here.

If all the M spacings are within the preset spacing threshold range, the spacing detection can be considered qualified. Conversely, if there is a spacing that is not within the preset spacing threshold range, the spacing detection can be considered unqualified.

In this way, on the one hand, the top cover edge line and the insulation film edge line can be segmented according to the number of welding marks, and the spacing between each pair of segments can be determined, so that whether the spacing between the insulation film and the top cover is qualified can be detected according to multiple spacings, further improving the accuracy of spacing detection. On the other hand, the M spacings can be screened from the N spacings for detection, saving computing resources and improving detection efficiency.

In some embodiments, the upper computer is further configured to:
extract a bottom support surface region and a bottom support sheet region according to a first exposure image of the bottom support surface; and
determine whether a bottom support sheet is offset relative to the bottom support surface according to the bottom support surface region, the bottom support sheet region and a preset region width threshold.

In this embodiment, after the first exposure images and second exposure images of different surfaces of the battery cell are acquired by the first to fifth image capturing assemblies, these images can be marked for different surfaces.

According to the first exposure image of the bottom support surface, feature extraction can be performed within a pre-determined detection frame in terms of morphological and grayscale features, and the like to extract the bottom support surface region and the bottom support sheet region, and then whether the bottom support sheet is offset relative to the bottom support surface is determined according to the bottom support surface region, the bottom support sheet region and the preset region width threshold.

In this way, whether the bottom support sheet is offset relative to the bottom support surface can be detected through the first exposure image of the bottom support surface, realizing efficient and accurate defect detection of the battery cell insulation film and improving the yield rate.

In some embodiments, the upper computer is further configured to:
acquire a first region according to a second exposure image of the bottom support surface and a region of interest;
perform dilation processing on the first region to obtain a dilated region;
perform difference processing on the region of interest and the dilated region to obtain a second region;
perform difference processing on the second region and a central interference region to obtain a decarburization detection region, where the central interference region is a rectangular region generated in a middle of the second region; and
determine, according to a morphological feature and grayscale feature of the decarburization detection region, whether an electrode sheet is exposed at a bottom of the battery cell.

In this embodiment, according to a pre-drawn region of interest, two upper and lower dark background regions, that is, the first region, can be acquired from the second exposure image of the bottom support surface. Dilation processing can be performed on the first region in a vertical direction to obtain a dilated region after dilation. Difference processing is performed on the pre-drawn region of interest and the dilated region to obtain a bright region in the middle of the bottom support surface, that is, the second region. A rectangular region is generated in the middle of the second region, and the rectangular region is the central interference region. In this region, decarburization detection is not performed. Difference processing can be performed on the second region and the central interference region to obtain the decarburization detection region. Morphological feature and grayscale feature detection can be performed within the decarburization detection region. If a target region satisfying the morphological feature and grayscale feature corresponding to an electrode sheet is detected in the decarburization detection region, it can be considered that an electrode sheet is exposed at the bottom of the battery cell. If no target region is detected, it is considered that an electrode sheet is not exposed at the bottom of the battery cell.

In this way, whether an electrode sheet is exposed at the bottom of the battery cell can be detected through the second exposure image of the bottom support surface, realizing efficient and accurate defect detection of the battery cell insulation film and improving the yield rate.

Based on the above system for inspecting a battery cell insulation film, an embodiment of the present application provides a method for inspecting a battery cell insulation film, which may include the following steps:
Step 401. Transfer a battery cell through a transfer mechanism, where the transfer mechanism includes a base, a sliding table, a first clamping jaw and a second clamping jaw.

Step 402. In a case that the first clamping jaw places the battery cell on the sliding table and the sliding table transfers the battery cell to a first image capturing position, acquire an image of a first large surface of the battery cell through a first image capturing assembly located on a side of the battery cell facing away from the base, and acquire images of a first side surface and a second side surface of the battery cell respectively through a second image capturing assembly and a third image capturing assembly located on two sides of the battery cell.

Step 403. Move the battery cell from the first image capturing position to a second image capturing position through the sliding table.

Step 404. In a case that the sliding table transfers the battery cell to the second image capturing position and the second clamping jaw grips the battery cell, a fourth image capturing assembly located on a side of the battery cell facing away from the second clamping jaw acquires an image of a bottom support surface of the battery cell, and a fifth image capturing assembly located on a side of the battery cell close to the base acquires an image of a second large surface of the battery cell.

Step 405. An upper computer detects whether an insulation film of the battery cell has a defect according to the images of the first large surface, the first side surface, the second side surface, the second large surface and the bottom support surface, where the images include a first exposure image and a second exposure image, and an exposure level of the first exposure image is greater than an exposure level of the second exposure image.

In this embodiment, the battery cell can be transferred through cooperation of the first clamping jaw, the sliding table and the second clamping jaw. The battery cell is transferred to the first image capturing position through the sliding table, so that at the first image capturing position, the first to third image capturing assemblies respectively located at positions corresponding to three surfaces of the battery cell can acquire the images of the first large surface, the first side surface and the second side surface, and then the battery cell is transferred to the second image capturing position through the sliding table. The second clamping jaw grips the battery cell, and at this time the fourth and fifth image capturing assemblies respectively located at positions corresponding to the other two surfaces of the battery cell can acquire the images of the bottom support surface and the second large surface. In this way, the images of five surfaces of the battery cell with different exposure levels can be acquired during translation and transferring of the battery cell, so that the acquisition of the images is more efficient and convenient. In addition, the upper computer can detect whether the insulation film of the battery cell has a defect according to these images, replacing manual visual inspection, realizing efficient and accurate defect detection of the battery cell insulation film, and improving the yield rate.

In some embodiments, the detecting whether an insulation film of the battery cell has a defect according to the images of the first large surface, the first side surface, the second side surface, the second large surface and the bottom support surface includes:
performing template positioning on first exposure images of the first large surface, the first side surface, the second side surface and the second large surface to obtain template matching information of the battery cell, where a template indicates a relative position feature between a top cover and a preset defect detection region of the battery cell, and the preset defect detection region includes at least one of regions for spacing detection, welding mark detection, insulation film lifting detection, blue glue detection, wire drawing detection and dirt detection;
determining a defect detection region from the images of the first large surface, the first side surface, the second side surface and the second large surface according to the template matching information; and
detecting whether the insulation film of the battery cell has a defect according to a morphological feature and grayscale feature of the defect detection region.

In this way, template positioning can be performed through the first exposure images of the first large surface, the first side surface, the second side surface and the second large surface to match the defect detection region. Then, spacing detection, welding mark detection, insulation film lifting detection, blue glue detection, wire drawing detection and dirt detection are performed according to the morphological feature and grayscale feature of the defect detection region, realizing efficient and accurate defect detection of the battery cell insulation film and improving the yield rate.

In some embodiments, in a case that the defect detection region is a spacing detection region, the detecting whether the insulation film of the battery cell has a defect according to a morphological feature and grayscale feature of the defect detection region includes:
determining N welding marks according to the morphological feature and grayscale feature of the defect detection region, where N is an integer greater than 1;
extracting N segments of top cover edge line and N segments of insulation film edge line from the defect detection region according to the N welding marks;
determining N spacings between the insulation film and the top cover according to each segment of top cover edge line and each segment of insulation film edge line;
sorting the N spacings to obtain a spacing sequence;
screening M spacings from the spacing sequence, where M is an integer greater than 1 and M is less than N; and
determining, according to the M spacings and a preset spacing threshold range, whether a spacing between the insulation film and the top cover of the battery cell does not exceed a spacing threshold range.

In this way, on the one hand, the top cover edge line and the insulation film edge line can be segmented according to the number of welding marks, and the spacing between each pair of segments can be determined, so that whether the spacing between the insulation film and the top cover is qualified can be detected according to multiple spacings, further improving the accuracy of spacing detection. On the other hand, the M spacings can be screened from the N spacings for detection, saving computing resources and improving detection efficiency.

In some embodiments, the detecting whether an insulation film of the battery cell has a defect according to the images of the first large surface, the first side surface, the second side surface, the second large surface and the bottom support surface includes:
extracting a bottom support surface region and a bottom support sheet region according to a first exposure image of the bottom support surface; and
determining whether a bottom support sheet is offset relative to the bottom support surface according to the bottom support surface region, the bottom support sheet region and a preset region width threshold.

In this way, whether the bottom support sheet is offset relative to the bottom support surface can be detected through the first exposure image of the bottom support surface, realizing efficient and accurate defect detection of the battery cell insulation film and improving the yield rate.

In some embodiments, the detecting whether an insulation film of the battery cell has a defect according to the images of the first large surface, the first side surface, the second side surface, the second large surface and the bottom support surface includes:
acquiring a first region according to a second exposure image of the bottom support surface and a region of interest;
performing dilation processing on the first region to obtain a dilated region;
performing difference processing on the region of interest and the dilated region to obtain a second region;
performing difference processing on the second region and a central interference region to obtain a decarburization detection region, where the central interference region is a rectangular region generated in a middle of the second region; and
determining, according to a morphological feature and grayscale feature of the decarburization detection region, whether an electrode sheet is exposed at a bottom of the battery cell.

In this way, whether an electrode sheet is exposed at the bottom of the battery cell can be detected through the second exposure image of the bottom support surface, realizing efficient and accurate defect detection of the battery cell insulation film and improving the yield rate.

In some embodiments, after the detecting whether an insulation film of the battery cell has a defect by the upper computer according to the images of the first large surface, the first side surface, the second side surface, the second large surface and the bottom support surface, the method further includes:
in a case that the upper computer detects that the insulation film of the battery cell has a defect, moving the battery cell to a target position through the second clamping jaw, where the target position is a position for placing a defective battery cell.

In this way, the second clamping jaw can move a battery cell with a defect to the position for placing a defective battery cell for rework or destruction, thereby improving the yield rate of batteries.

It should be noted that the above method for inspecting a battery cell insulation film is based on the same concept as the system for inspecting a battery cell insulation film of the method embodiments of the present application and is a method corresponding to the above system for inspecting a battery cell insulation film. All embodiments in the above system for inspecting a battery cell insulation film embodiments are applicable to the embodiments of the method. For its specific functions and technical effects brought thereby, reference can be made to the method embodiments, which will not be repeated here.

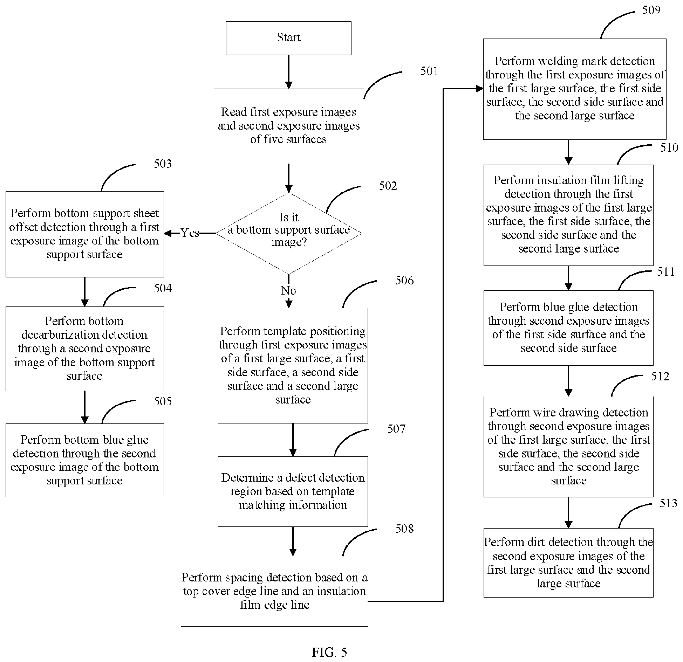

As shown in FIG. 5, an embodiment of the present application further provides a specific scenario embodiment of a method for inspecting a battery cell insulation film. The scenario embodiment may include the following steps:
Step 501. Read first exposure images and second exposure images of five surfaces.

Step 502. Is it a bottom support surface image. If yes, execute step 503. If no, execute step 506.

Step 503. Perform bottom support sheet offset detection through a first exposure image of a bottom support surface.

Step 504. Perform bottom decarburization detection through a second exposure image of the bottom support surface.

Step 505. Perform bottom blue glue detection through the second exposure image of the bottom support surface.

Step 506. Perform template positioning through first exposure images of a first large surface, a first side surface, a second side surface and a second large surface. A template indicates a relative position feature between a top cover and a preset defect detection region of a battery cell. The preset defect detection region includes at least one of regions for spacing detection, welding mark detection, insulation film lifting detection, blue glue detection, wire drawing detection and dirt detection.

Step 507. Determine a defect detection region based on template matching information.

Step 508. Perform spacing detection based on a top cover edge line and an insulation film edge line. The top cover edge line and the insulation film edge line can be extracted from a spacing detection region.

Step 509. Perform welding mark detection through the first exposure images of the first large surface, the first side surface, the second side surface and the second large surface. A welding mark detection region can be determined from the first exposure images of the first large surface, the first side surface, the second side surface and the second large surface, and welding mark detection is performed based on a morphological feature and grayscale feature of the welding mark detection region.

Step 510. Perform insulation film lifting detection through the first exposure images of the first large surface, the first side surface, the second side surface and the second large surface. An insulation film lifting detection region can be determined from the first exposure images of the first large surface, the first side surface, the second side surface and the second large surface, and insulation film lifting detection is performed based on a morphological feature and grayscale feature of the insulation film lifting detection region.

Step 511. Perform blue glue detection through second exposure images of the first side surface and the second side surface. A blue glue detection region can be determined from the second exposure images of the first side surface and the second side surface, and blue glue detection is performed based on a morphological feature and grayscale feature of the blue glue detection region.

Step 512. Perform wire drawing detection through second exposure images of the first large surface, the first side surface, the second side surface and the second large surface. A wire drawing detection region can be determined from the second exposure images of the first large surface, the first side surface, the second side surface and the second large surface, and wire drawing detection is performed based on a morphological feature and grayscale feature of the wire drawing detection region.

Step 513. Perform dirt detection through second exposure images of the first large surface and the second large surface. A dirt detection region can be determined from the second exposure images of the first large surface and the second large surface, and dirt detection is performed based on a morphological feature and grayscale feature of the dirt detection region.

It can be understood that this scenario embodiment is only used as a detection example to illustrate the technical solutions in the embodiments of the present application. In the embodiments of the present application, there is no sequence requirement between bottom support sheet offset detection, bottom decarburization detection, spacing detection, welding mark detection, insulation film lifting detection, blue glue detection, wire drawing detection and dirt detection. That is, various detections can be performed simultaneously or sequentially in any order, which is not specifically limited here.

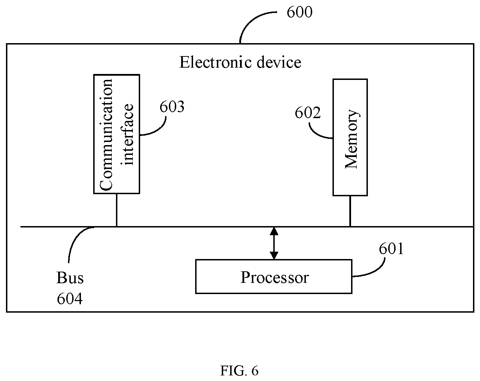

FIG. 6 shows a schematic diagram of a hardware structure of an electronic device provided by another embodiment of the present application.

An electronic device 600 may include a processor 601 and a memory 602 storing a program or instructions. When the processor 601 executes the program, the steps in any of the above method embodiments are implemented.

For example, the program can be divided into one or more modules/units, and one or more modules/units are stored in the memory 602 and executed by the processor 601 to complete the present application. One or more modules/units may be a series of program instruction segments capable of completing specific functions, and the instruction segments are used to describe the execution process of the program in the device.

Specifically, the above processor 601 may include a central processing unit (CPU), or an application specific integrated circuit (Application Specific Integrated Circuit, ASIC), or may be configured as one or more integrated circuits that implement the embodiments of the present application.

The memory 602 may include a mass storage device for data or instructions. By way of example and not limitation, the memory 602 may include a hard disk drive (Hard Disk Drive, HDD), a floppy disk drive, a flash memory, an optical disk, a magneto-optical disk, a magnetic tape or a universal serial bus (Universal Serial Bus, USB) drive or a combination of two or more of the above. Where appropriate, the memory 602 may include removable or non-removable (or fixed) media. Where appropriate, the memory 602 may be internal or external to an integrated gateway disaster recovery device. In a specific embodiment, the memory 602 is a non-volatile solid-state memory.

The memory may include a read-only memory (ROM), a random access memory (RAM), a magnetic storage medium device, an optical storage medium device, a flash memory device, or an electrical, optical or other physical/tangible memory storage device. Therefore, generally, the memory includes one or more tangible (non-transitory) readable storage media (for example, storage devices) encoded with software including computer-executable instructions, and when the software is executed (for example, by one or more processors), it is operable to perform the operations described with reference to the method according to an aspect of the present disclosure.

The processor 601 implements any one of the methods in the above embodiments by reading and executing programs or instructions stored in the memory 602.

In an example, the electronic device may further include a communication interface 603 and a bus 604. The processor 601, the memory 602 and the communication interface 603 are connected through the bus 604 to complete communication with each other.

The communication interface 603 is mainly used to realize communication between various modules, devices, units and/or equipment in the embodiments of the present application.

The bus 604 includes hardware, software or both, and couples components of an online data traffic billing device to each other. By way of example and not limitation, the bus may include an accelerated graphics port (AGP) or other graphics bus, an enhanced industry standard architecture (EISA) bus, a front side bus (FSB), a hyper transport (HT) interconnect, an industry standard architecture (ISA) bus, InfiniBand interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standards association local (VLB) bus or other suitable buses or a combination of two or more of the above. Where appropriate, the bus 604 may include one or more buses. Although the embodiments of the present application describe and illustrate a specific bus, the present application contemplates any suitable bus or interconnection.

In addition, in combination with the methods in the above embodiments, an embodiment of the present application may provide a machine-readable storage medium for implementation. The machine-readable storage medium stores a program or an instruction. When the program or instruction is executed by a processor, any one of the methods in the above embodiments is implemented. The machine-readable storage medium can be read by a machine such as a computer.

An embodiment of the present application further provides a chip, and the chip includes a processor and a communication interface. The communication interface is coupled with the processor, and the processor is configured to run a program or an instruction to implement various processes of the above method embodiments and can achieve the same technical effects. To avoid repetition, details are not repeated here.

It should be understood that the chip mentioned in the embodiments of the present application may also be called a system-level chip, a system chip, a chip system, a system-on-chip chip, or the like.

An embodiment of the present application provides a computer program product, and the program product is stored in a machine-readable storage medium. The program product is executed by at least one processor to implement various processes of the above method embodiments and can achieve the same technical effects. To avoid repetition, details are not repeated here.

It should be clarified that the present application is not limited to the specific configurations and processes described above and shown in the figures. For the sake of brevity, detailed descriptions of known methods are omitted here. In the above embodiments, several specific steps are described and shown as examples. However, the method process of the present application is not limited to the specific steps described and shown. Those skilled in the art can make various changes, modifications and additions, or change the order between steps after understanding the spirit of the present application.

The functional modules shown in the structural block diagrams described above can be implemented as hardware, software, firmware or a combination thereof. When implemented in hardware, it can be, for example, an electronic circuit, an application specific integrated circuit (ASIC), appropriate firmware, a plug-in, or a function card. When implemented in software, the elements of the present application are programs or code segments used to perform the required tasks. The programs or code segments can be stored in a machine-readable medium or transmitted over a transmission medium or a communication link carried in a carrier wave. "Machine-readable medium" can include any medium capable of storing or transmitting information. Examples of machine-readable media include electronic circuits, semiconductor memory devices, ROM, flash memory, erasable ROM (EROM), floppy disks, CD-ROM, optical disks, hard disks, optical fiber media, radio frequency (RF) links, and the like. Code segments can be downloaded via a computer network such as the Internet, an intranet, and the like.

It should also be noted that the exemplary embodiments mentioned in the present application describe some methods or systems based on a series of steps or devices. However, the present application is not limited to the order of the above steps, that is, the steps can be performed in the order mentioned in the embodiments, or in an order different from the embodiments, or several steps can be performed simultaneously.

The aspects of the present disclosure are described above with reference to flowcharts and/or block diagrams of methods, devices (systems) and program products according to embodiments of the present disclosure. It should be understood that each block in the flowcharts and/or block diagrams and combinations of blocks in the flowcharts and/or block diagrams can be implemented by computer programs or instructions. These programs or instructions can be provided to a processor of a general-purpose computer, a special-purpose computer, or other programmable data processing devices to produce a machine, so that the instructions executed by the processor of the computer or other programmable data processing devices enable the implementation of the functions/actions specified in one or more blocks of the flowcharts and/or block diagrams. Such a processor may be, but is not limited to, a general-purpose processor, a special-purpose processor, a special application processor, or a field programmable logic circuit. It can also be understood that each block in the block diagrams and/or flowcharts and combinations of blocks in the block diagrams and/or flowcharts can also be implemented by dedicated hardware that performs specified functions or actions, or can be implemented by a combination of dedicated hardware and computer instructions.

Although the present application has been described with reference to preferred embodiments, various improvements can be made to it without departing from the scope of the present application and components therein can be replaced with equivalents. In particular, as long as there is no structural conflict, the technical features mentioned in the various embodiments can be combined in any manner. The present application is not limited to the specific embodiments disclosed herein, but includes all technical solutions falling within the scope of the claims.

## Claims

1. A system for inspecting a battery cell insulation film, wherein the system comprises:
a transfer mechanism, comprising a base, a sliding table, a first clamping jaw and a second clamping jaw, wherein the first clamping jaw and the second clamping jaw are respectively arranged on two sides of the base along a first direction, and the sliding table is arranged on the base and is capable of sliding on the base from a position of the first clamping jaw to a position of the second clamping jaw;
first to fifth image capturing assemblies, wherein in a case that the first clamping jaw places a battery cell on the sliding table and the sliding table transfers the battery cell to a first image capturing position, the first image capturing assembly located on a side of the battery cell facing away from the base acquires an image of a first large surface of the battery cell, and the second image capturing assembly and the third image capturing assembly located on two sides of the battery cell along a second direction respectively acquire images of a first side surface and a second side surface of the battery cell, wherein the second direction is perpendicular to the first direction; and in a case that the sliding table transfers the battery cell to a second image capturing position and the second clamping jaw grips the battery cell, the fourth image capturing assembly located on a side of the battery cell facing away from the second clamping jaw acquires an image of a bottom support surface of the battery cell, and the fifth image capturing assembly located on a side of the battery cell close to the base acquires an image of a second large surface of the battery cell; and
an upper computer configured to detect whether an insulation film of the battery cell has a defect according to the images of the first large surface, the first side surface, the second side surface, the second large surface and the bottom support surface, wherein the images comprise a first exposure image and a second exposure image, and an exposure level of the first exposure image is greater than an exposure level of the second exposure image.

2. The system according to claim 1, wherein the transfer mechanism further comprises a bracket, and the bracket is arranged on the base and is located between the first clamping jaw and the second clamping jaw;
the first image capturing assembly is arranged on a side of the bracket facing away from the base;
the second image capturing assembly and the third image capturing assembly are respectively arranged on two sides of the bracket along the second direction;
the fourth image capturing assembly is arranged on a side of the bracket facing away from the second clamping jaw; and
a through hole is provided at a position on the base corresponding to the second clamping jaw, and the fifth image capturing assembly is arranged at a position on the base corresponding to the through hole.

3. The system according to claim 1 or 2, wherein each of the image capturing assemblies comprises a strip light source and a camera; and
in a case that the battery cell is located at the first image capturing position or the second image capturing position, the strip light source is arranged between the camera and the battery cell, and a light emitting surface of the strip light source faces towards a surface of the respective corresponding battery cell.

4. The system according to claim 3, wherein a light emitting surface of the strip light source forms an included angle with a plane on which the base is located.

5. The system according to claim 1, wherein a slide rail is arranged on the base along the first direction, and the sliding table is capable of sliding along the slide rail.

6. The system according to claim 1, wherein in a case that the upper computer detects that the insulation film of the battery cell has a defect, the second clamping jaw moves the battery cell to a target position, and the target position is a position for placing a defective battery cell.

7. The system according to claim 1, wherein the upper computer is further configured to:
perform template positioning on first exposure images of the first large surface, the first side surface, the second side surface and the second large surface to obtain template matching information of the battery cell, wherein the template indicates a relative position feature between a top cover and a preset defect detection region of the battery cell, and the preset defect detection region comprises at least one of regions for spacing detection, welding mark detection, insulation film lifting detection, blue glue detection, wire drawing detection and dirt detection;
determine a defect detection region from the images of the first large surface, the first side surface, the second side surface and the second large surface according to the template matching information; and
detect whether the insulation film of the battery cell has a defect according to a morphological feature and grayscale feature of the defect detection region.

8. The system according to claim 7, wherein in a case that the defect detection region is a spacing detection region, the upper computer is further configured to:
determine N welding marks according to the morphological feature and grayscale feature of the defect detection region, wherein N is an integer greater than 1;
extract N segments of top cover edge line and N segments of insulation film edge line from the defect detection region according to the N welding marks;
determine N spacings between the insulation film and the top cover according to each segment of top cover edge line and each segment of insulation film edge line;
sort the N spacings to obtain a spacing sequence;
screen M spacings from the spacing sequence, wherein M is an integer greater than 1 and M is less than N; and
determine, according to the M spacings and a preset spacing threshold range, whether a spacing between the insulation film and the top cover of the battery cell does not exceed a spacing threshold range.

9. The system according to claim 7, wherein in a case that the defect detection region is a welding mark detection region, the upper computer is further configured to:
determine a welding mark from the defect detection region according to the morphological feature and grayscale feature of the defect detection region; and
determine, according to an area of the welding mark and a preset welding mark area threshold, whether the welding mark exceeds a welding mark area threshold.

10. The system according to claim 7, wherein in a case that the defect detection region is at least one of regions for insulation film lifting detection, blue glue detection, wire drawing detection and dirt detection, the upper computer is further configured to:
determine, according to the morphological feature and grayscale feature of the defect detection region, whether a target region exists in the defect detection region;
wherein in a case that the defect detection region is an insulation film lifting detection region, the target region is an insulation film lifting region, in a case that the defect detection region is a blue glue detection region, the target region is a blue glue region, in a case that the defect detection region is a wire drawing detection region, the target region is a wire drawing region, and in a case that the defect detection region is a dirt detection region, the target region is a stain region.

11. The system according to claim 1, wherein the upper computer is further configured to:
extract a bottom support surface region and a bottom support sheet region according to a first exposure image of the bottom support surface; and
determine whether the bottom support sheet is offset relative to the bottom support surface according to the bottom support surface region, the bottom support sheet region and a preset region width threshold.

12. The system according to claim 1, wherein the upper computer is further configured to:
acquire a first region according to a second exposure image of the bottom support surface and a region of interest;
perform dilation processing on the first region to obtain a dilated region;
perform difference processing on the region of interest and the dilated region to obtain a second region;
perform difference processing on the second region and a central interference region to obtain a decarburization detection region, wherein the central interference region is a rectangular region generated in a middle of the second region; and
determine, according to a morphological feature and grayscale feature of the decarburization detection region, whether an electrode sheet is exposed at a bottom of the battery cell.

13. A method for inspecting a battery cell insulation film, applied to the system for inspecting a battery cell insulation film according to any one of claims 1 to 12, wherein the method comprises:
transferring a battery cell through a transfer mechanism, wherein the transfer mechanism comprises a base, a sliding table, a first clamping jaw and a second clamping jaw;
in a case that the first clamping jaw places the battery cell on the sliding table and the sliding table transfers the battery cell to a first image capturing position, acquiring an image of a first large surface of the battery cell through a first image capturing assembly located on a side of the battery cell facing away from the base, and acquiring images of a first side surface and a second side surface of the battery cell respectively through a second image capturing assembly and a third image capturing assembly located on two sides of the battery cell;
moving the battery cell from the first image capturing position to a second image capturing position through the sliding table;
in a case that the sliding table transfers the battery cell to the second image capturing position and the second clamping jaw grips the battery cell, acquiring, by a fourth image capturing assembly located on a side of the battery cell facing away from the second clamping jaw, an image of a bottom support surface of the battery cell, and acquiring, by a fifth image capturing assembly located on a side of the battery cell close to the base, an image of a second large surface of the battery cell; and
detecting, by an upper computer, whether an insulation film of the battery cell has a defect according to the images of the first large surface, the first side surface, the second side surface, the second large surface and the bottom support surface, wherein the images comprise a first exposure image and a second exposure image, and an exposure level of the first exposure image is greater than an exposure level of the second exposure image.

14. The method according to claim 13, wherein the detecting whether an insulation film of the battery cell has a defect according to the images of the first large surface, the first side surface, the second side surface, the second large surface and the bottom support surface comprises:
performing template positioning on first exposure images of the first large surface, the first side surface, the second side surface and the second large surface to obtain template matching information of the battery cell, wherein the template indicates a relative position feature between a top cover and a preset defect detection region of the battery cell, and the preset defect detection region comprises at least one of regions for spacing detection, welding mark detection, insulation film lifting detection, blue glue detection, wire drawing detection and dirt detection;
determining a defect detection region from the images of the first large surface, the first side surface, the second side surface and the second large surface according to the template matching information; and
detecting whether the insulation film of the battery cell has a defect according to a morphological feature and grayscale feature of the defect detection region.

15. The method according to claim 14, wherein in a case that the defect detection region is a spacing detection region, the detecting whether the insulation film of the battery cell has a defect according to a morphological feature and grayscale feature of the defect detection region comprises:
determining N welding marks according to the morphological feature and grayscale feature of the defect detection region, wherein N is an integer greater than 1;
extracting N segments of top cover edge line and N segments of insulation film edge line from the defect detection region according to the N welding marks;
determining N spacings between the insulation film and the top cover according to each segment of top cover edge line and each segment of insulation film edge line;
sorting the N spacings to obtain a spacing sequence;
screening M spacings from the spacing sequence, wherein M is an integer greater than 1 and M is less than N; and
determining, according to the M spacings and a preset spacing threshold range, whether a spacing between the insulation film and the top cover of the battery cell does not exceed a spacing threshold range.

16. The system according to claim 14, wherein in a case that the defect detection region is a welding mark detection region, the detecting whether the insulation film of the battery cell has a defect according to a morphological feature and grayscale feature of the defect detection region comprises:
determining a welding mark from the defect detection region according to the morphological feature and grayscale feature of the defect detection region; and
determining, according to an area of the welding mark and a preset welding mark area threshold, whether the welding mark exceeds a welding mark area threshold.

17. The system according to claim 14, wherein in a case that the defect detection region is at least one of regions for insulation film lifting detection, blue glue detection, wire drawing detection and dirt detection, the detecting whether the insulation film of the battery cell has a defect according to a morphological feature and grayscale feature of the defect detection region comprises:
determining, according to the morphological feature and grayscale feature of the defect detection region, whether a target region exists in the defect detection region;
wherein in a case that the defect detection region is an insulation film lifting detection region, the target region is an insulation film lifting region, in a case that the defect detection region is a blue glue detection region, the target region is a blue glue region, in a case that the defect detection region is a wire drawing detection region, the target region is a wire drawing region, and in a case that the defect detection region is a dirt detection region, the target region is a stain region.

18. The method according to claim 13, wherein the detecting whether an insulation film of the battery cell has a defect according to the images of the first large surface, the first side surface, the second side surface, the second large surface and the bottom support surface comprises:
extracting a bottom support surface region and a bottom support sheet region according to a first exposure image of the bottom support surface; and
determining whether the bottom support sheet is offset relative to the bottom support surface according to the bottom support surface region, the bottom support sheet region and a preset region width threshold.

19. The method according to claim 13, wherein the detecting whether an insulation film of the battery cell has a defect according to the images of the first large surface, the first side surface, the second side surface, the second large surface and the bottom support surface comprises:
acquiring a first region according to a second exposure image of the bottom support surface and a region of interest;
performing dilation processing on the first region to obtain a dilated region;
performing difference processing on the region of interest and the dilated region to obtain a second region;
performing difference processing on the second region and a central interference region to obtain a decarburization detection region, wherein the central interference region is a rectangular region generated in a middle of the second region; and
determining, according to a morphological feature and grayscale feature of the decarburization detection region, whether an electrode sheet is exposed at a bottom of the battery cell.

20. The method according to any one of claims 13 to 19, wherein after the detecting, by an upper computer, whether an insulation film of the battery cell has a defect according to the images of the first large surface, the first side surface, the second side surface, the second large surface and the bottom support surface, the method further comprises:
in a case that the upper computer detects that the insulation film of the battery cell has a defect, moving the battery cell to a target position through the second clamping jaw, wherein the target position is a position for placing a defective battery cell.
